(19) Europäisches Patentamt
European Patent Office
Office européen des brevets

(11) **EP 2 758 224 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(21) Anmeldenummer: **12775612.0**

(22) Anmeldetag: **21.09.2012**

(51) Int Cl.:
*B29C 49/18* (2006.01)     *B29C 49/48* (2006.01)
*B29C 49/64* (2006.01)     *B29C 49/78* (2006.01)
*B29L 31/00* (2006.01)

(86) Internationale Anmeldenummer:
**PCT/EP2012/003962**

(87) Internationale Veröffentlichungsnummer:
**WO 2013/041234 (28.03.2013 Gazette 2013/13)**

(54) **VORRICHTUNG UND VERFAHREN ZUR PROZESS- UND ZYKLUSOPTIMIERTEN HERSTELLUNG VON HOHLKÖRPERN AUS EINEM SCHLAUCHFÖRMIGEN ROHLING**

DEVICE AND METHOD FOR PROCESS-OPTIMIZED AND CYCLE-OPTIMIZED PRODUCTION OF HOLLOW BODIES FROM A TUBULAR BLANK

DISPOSITIF ET PROCÉDÉ POUR LA PRODUCTION, À OPTIMISATION DE PROCESSUS ET DE CYCLE, DE CORPS CREUX À PARTIR D'UNE ÉBAUCHE TUBULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2011 DE 102011114083**

(43) Veröffentlichungstag der Anmeldung:
**30.07.2014 Patentblatt 2014/31**

(73) Patentinhaber: **Creative Balloons Maschinenbau GmbH & Co. KG**
**69198 Schriesheim (DE)**

(72) Erfinder: **GÖBEL, Fred**
**69259 Wilhelmsfeld (DE)**

(74) Vertreter: **Küchler, Stefan**
**Patentanwalt**
**Färberstrasse 20**
**90402 Nürnberg (DE)**

(56) Entgegenhaltungen:
**US-A1- 2003 183 966     US-A1- 2010 323 048**

EP 2 758 224 B1

**Beschreibung**

Die Erfindung richtet sich auf eine Vorrichtung und ein Verfahren zur Herstellung einer Ballonkomponente vorzugsweise mit unterschiedlichen Durchmesserbereichen aus einem Schlauchrohling, insbesondere zur prozess- und zyklusoptimierten Blasformung einer Ballonkomponente für einen medizinischen Katheter, unter Temperierung des Rohlings auf ein Verformungsniveau, anschließender Beaufschlagung mit einem Blasdruck bei optional gleichzeitiger Streckung des Rohlings, Ausformung des sich aufdehnenden Rohlings in eine Formkavität, anschließende Temperierung auf einem Ausformungsniveau, sowie schließlich Kühlung und Fixierung des geformten Ballons in seiner ausgeformten Gestalt, mit bzw. unter Verwendung einer Einrichtung zum Fixieren, insbesondere Einspannen, eines Schlauchrohlings, und mit bzw. unter Verwendung wenigstens einem (-es) Formwerkzeug(s), welches längsgeteilt gestaltet ist mit wenigstens zwei zum Öffnen und Schließen der Form etwa lotrecht zu der Trennungsfläche oder -ebene auseinander und zusammen fahrbaren Formhälften.

Die Erfindung bezieht sich vorrangig auf die speziellen Erfordernisse bei der Blasformung von schlauchförmigen Rohlingen aus Nylon (Polyamid) oder Materialien mit polyamidartigen, plastischen Verformungscharakteristika zu Ballonkomponenten, wie sie beispielsweise als funktionelle Komponente bei medizinischen Kathetern Anwendung finden. Sie ist jedoch auch bei der thermischen Formung thermoplastisch verformbarer Polymere, wie beispielsweise Polyurethan, von Vorteil, dessen Formungsergebnis ebenfalls in erheblichem Umfang von einer möglichst homogenen Temperierungswirkung des Formwerkzeuges auf den auszublasenden Rohling abhängt.

Katheterballonkomponenten aus Polyamid werden unter anderem für die interventionelle Aufdehnung verengter Gefäße verwendet. Die hierbei auf die in der Regel sehr dünnwandig ausgeführten Ballonkomponente wirkenden Drucke bewegen sich in der Größenordnung von ca. 10 bis 50 bar. Entscheidend für die Anwendungssicherheit des Produktes ist daher vor allem ein fehlerfreier, exakt reproduzierbarer Formungsprozess des funktionellen Ballons. Seine Stabilität und mechanische Zuverlässigkeit ist im Wesentlichen von einer gleichförmig konstanten sowie allseitig homogenen Temperierung der Formoberflächen des Formwerkzeuges bzw. des sich in der Form befindenden Rohlings abhängig. Abweichungen der auf das Polymer wirkenden Formungstemperatur in Bereiche, welche zu einer strukturellen Schwächung des Rohlings oder Ballons führen, müssen sicher ausgeschlossen werden.

In der WO 2010/009901 A2 wird ein Maschinen- bzw. Werkzeugtyp vorgestellt, der über sämtliche Anteile der Formoberfläche hinweg, den Temperaturgradienten zwischen Mediumtemperatur und der effektiven Formungstemperatur auf der Formoberfläche auf ein kleinstmögliches Maß reduziert. Durch die Verwendung konstant temperierter flüssiger Medien sowie durch den so ermöglichten definierten prompten Wechsel zwischen mehrerer dieser Medien auf verschiedenen konstant regulierten Temperierungsniveaus, können passagere, kritisch hohe Wirktemperaturen (overshoots) auf den zu verformenden Rohling, wie sie bei konventionellen Werkzeugtechniken häufig vorkommen, sicher vermieden werden.

Insbesondere werden durch die Temperierung mittels eines konstant temperierten Mediums die Voraussetzungen für eine homogene, möglichst gleichförmige Durchwärmung der Formungsoberfläche des Werkzeuges bzw. des zu verformenden Rohlings ermöglicht. Die WO 2010/009901 A2 beschreibt bezüglich der Ausführung des Werkzeuges u. a. Formwerkzeuge auf der Basis von im selektiven Laser-Sinterungsverfahren (SLS) hergestellten Metall-Hohlformen, die einen besonderen Leichtbau im Verbund mit einer aufwendig komplexen Innen- und Außenstruktur ermöglichen. So wird beispielsweise ein kontursymmetrischer Aufbau der medium-durchströmten Werkzeugwandung vorgestellt, der eine näherungsweise Ablesung der auf den Formungsflächen im Inneren des Werkzeugs wirkenden Temperaturen von der Werkzeugaußenfläche erlaubt.

Die vorliegende Erfindung bezieht die in WO 2010/009901 A2 vorgeschlagenen Gestalt- und Wirkungscharakteristika bei der Auslegung der im Folgenden beschriebenen Werkzeuge ausdrücklich ein. Für die prozess- und qualitätsoptimierte Blasformung von insbesondere Polyamid-Ballonkomponenten sind jedoch weitere spezifische gestalterische Merkmale der Formwerkzeuge erforderlich, wie sie im Einzelnen in der Folge beschrieben werden.

Die Blasformung von Polyamid-Ballonkomponenten erfolgt heute in der Regel in zwei separaten Prozessschritten. Im ersten Schritt wird der Schlauchrohling zu seinen beiden seitlichen Enden hin durch plastische Verformung bei moderater Temperierung des Schlauchmaterials dünn ausgezogen, so dass die Ballonenden in ihrem Durchmesser bereits nahezu auf das schließliche Schaftmaß des den Ballon tragenden Katheters reduziert werden. Das mittige, den späteren Ballonanteil ausformende Segment des Rohlings verbleibt hingegen unverformt in seinem Ausgangsmaß. Dieser, als sogenanntes "Necking" bezeichnete Prozess, erfolgt in der Regel in eigens hierzu ausgerüsteten Vorrichtungen, wobei lediglich die seitlich axial auszuziehenden Segmente des Rohlings auf ein entsprechendes Niveau temperiert werden und der zentrale, den Ballon ausformende Anteil untemperiert und somit starr bleibt.

In einem folgenden, zweiten Schritt der Ballonformung, und in einer entsprechend separaten weiteren Vorrichtung, wird der so vorbereitete "geneckte" Rohling dann in eine Formungskavität mit den Innenmaßen des schließlich zu formenden Ballons eingeführt. Als initialer Temperierungsschritt erfolgt innerhalb dieser "Formungskavität" eine Aufwärmung des Rohlings in den Temperaturbereich seiner Verformbarkeit auf das schließliche Ballonendmaß. Der Rohling wird bei Erreichen dieser Temperatur durch einen, in seinem Lumen beaufschlagten Blasdruck, sich sukzessive zu einem Ballon entwickelnd, in die temperierte Form hineingeblasen. Während der Ausblasphase bzw. der radialen Entwicklung des Ballons innerhalb der Formkavität wird in der Regel zusätzlich eine axiale Streckung des Rohlings ausgeübt.

Die erreichte Homogenität der Durchwärmung sämtlicher zu verformender bzw. auszuformender Anteile des "geneckten" Schlauchrohlings ist für das Formungsergebnis bzw. die Gleichmäßigkeit der durch die, bei der endgültigen Ausblasung zum Ballon wirkenden axialen und radialen Verformungskräfte erreichten Ausdünnung der Ballonhülle entscheidend. Da sich bei konventioneller Werkzeugtechnologie der mittige, ballonausformende Anteil des geneckten Schlauchrohlings im Zentrum der freien Kavität befindet, kann er nur durch die von der beabstandeten inneren Formwandung ausgehende Wärmestrahlung sowie durch in der Kavität herrschende Konvektion erwärmt werden. Bedingt durch die verschiedenen Abstände der Formwandflächen zu den jeweiligen Anteilen des Rohlings werden entsprechend exponierte Anteile des Rohschlauches früher bzw. intensiver erwärmt als weiter beabstandete. Entsprechend lange kann es bis zum Erreichen einer gleichförmigen Durchwärmung sämtlicher Anteile des Rohlings dauern. Bei konventioneller schwerer, massereicher Werkzeugtechnik erfolgt die Durchwärmung in der Regel von der Außenwandung des Formwerkzeuges zur Innenwandung bzw. dessen Formungsflächen. Das Formungswerkzeug stellt sich dabei in der Regel als massives, zylindrisches Element dar, das in einer temperierenden, tunnelförmigen Ummantelung eingeschoben ist. Mit steigendem Ballondurchmesser stellen sich zunehmend große Differenzen der Abstände der äußeren Ballonanteile (Bereiche des größten Ballondurchmessers) zu den Ballonanteilen in der Nähe des Ballonschaftes (kleinste Ballondurchmesser) ein. Entsprechend erwärmen sich die mehr zentral gelegenen Formanteile zeitverzögert, während die näher zum äußeren Umfang des Werkzeugs gelegenen Anteile der Kavität bereits relativ früh die Energie der temperierenden Ummantelung aufnehmen.

Ferner erfolgt die Temperierung bei derartigen Werkzeugen in der Regel durch initial im Formwerkzeug erzeugte Temperaturen, die deutlich über der eigentlichen, auf den Formflächen wirkenden Temperatur liegen. Ein entsprechend hoher Temperaturgradient sorgt für einen raschen Wärmefluß zwischen dem temperierenden Tunnel und dem Werkzeug, birgt jedoch auch die Gefahr von überschießenden Temperaturen in sich, die zu lokalen Überhitzungen des zu formenden Ballons führen können.

In der Summe stellt sich bei konventioneller Werkzeugtechnologie daher ein sehr inhomogenes Bild bei der Wärmeübertragung zwischen Werkzeug und zu verformendem Kunststoff dar. Dies sowohl bei der Vortemperierung des noch nicht blasdruckbeaufschlagten Rohlings innerhalb der Kavität, als auch bei dessen Ausformung unter Blasdruck.

Daraus resultiert das die Erfindung initiierende Problem, diese Nachteile des Standes der Technik zu vermeiden.

Dies gelingt bei einer gattungsgemäßen Vorrichtung erfindungsgemäß durch wenigstens eine Verstelleinheit zur Verstellung der Relativposition zwischen der Einrichtung zum Fixieren eines Schlauchrohlings und wenigstens einem Formwerkzeug in einer Verstellrichtung etwa innerhalb der Trennungsfläche oder - ebene zwischen den zwei Formhälften, sowie durch mehrere Temperierungs- und/oder Formungskavitäten in einem oder mehreren, gemeinsam verstellbaren Formwerkzeug(en) für die Durchführung unterschiedlicher Temperierungs- und/oder Formungsschritte, insbesondere jeweils mehrere Paare von in beiden Formhälften eingeformten Temperierungs- und/oder Formungskavitäten, welche einen gegenseitigen Versatz entlang der Verstellrichtung aufweisen.

Die Erfindung schlägt damit erstmals eine Werkzeug- bzw. Verfahrenstechnik vor, bei der mehrere Prozess- bzw. Verfahrensschritte, beispielsweise das sog. Necking als auch die schließliche Formung zum Ballon, innerhalb eines einzigen Arbeitsablaufes sequentiell abgearbeitet werden können, und neben der Beschleunigung der initialen Temperierung des Rohlings, insbesondere deren Homogenität über alle Anteile des Rohlings hinweg gewährleistet bzw. verbessert werden kann.

Bei nur einmaliger Fixierung des Rohlings in der Streck- und Blasvorrichtung kann dieser in einem einzigen Arbeitsablauf erfindungsgemäß optional geneckt, der geneckte Rohling vortemperiert und dieser schließlich auf sein endgültiges Ballonmaß ausgeformt werden. Der Rohling wechselt dabei von einer Formkavität in die Nächste, ohne dass er aus seiner Fixiervorrichtung entnommen werden muss.

Das Werkzeug kann dabei einen kontursymmetrischen Aufbau eines längsgeteilten Formwerkzeuges aufweisen, mit zwei sich von seitlich über dem Rohling schließenden Formhälften.

Es beinhaltet jedoch verschiedene separate Kavitäten zur schrittweisen Verformung bzw. Ausformung eines Rohlings zum Ballon, wobei deren Dimensionierung und Formgebung den Maßen und Formen des Rohlings bzw. Ballons in seinem jeweiligen Verfahrensschritt angepasst ist. Der zum Ballon auszuformende Rohling durchläuft die jeweiligen Formungskavitäten dabei entweder durch axiales oder vertikales Verfahren. Hierzu werden im Folgenden entsprechende Anordnungen der Formungskavitäten im Formwerkzeug sowie Verfahrvorrichtungen zum relativen Versatz des Rohlings zum Werkzeug vorgeschlagen.

Eine erfindungsgemäße Verstelleinheit kann als vertikale Hubeinheit oder als horizontale Verfahreinheit ausgebildet sein.

Es hat sich als günstig erwiesen, dass verschiedene Temperierungs- und/oder Formungskavitäten jeweils voneinander getrennte Temperierungshohlräume und/oder voneinander getrennte Zu- und Abläufe für ein Temperierungsmedium aufweisen.

Die Erfindung lässt sich dahingehend weiterbilden, dass verschiedene Temperierungs- und/oder Formungskavitäten voneinander getrennt und/oder thermisch gegeneinander isoliert sind.

Ein gattungsgemäßes Verfahren zur Herstellung einer Ballonkomponente vorzugsweise mit unterschiedlichen Durchmesserbereichen aus einem Schlauchrohling zeichnet sich erfindungsgemäß aus durch folgende Schritte:

Nach einem vorangehenden Temperierungs- und/oder Formungsschritt des Schlauchrohlings wird das Formwerkzeug vorübergehend geöffnet; die Relativposition zwischen der Einrichtung zum Fixieren eines Schlauchrohlings und dem Formwerkzeug wird in einer Verstellrichtung etwa innerhalb der Trennungsfläche oder -ebene zwischen den beiden Formhälften verstellt; nach einem Verstellweg, welcher einem endlichen Versatz zwischen mehreren Temperierungs- und/oder Formungskavitäten in dem Formwerkzeug entspricht, insbesondere einem endlichen Versatz zwischen mehreren Paaren von in beiden Formhälften eingeformten Formungskavitäten, wird das Formwerkzeug wieder geschlossen und ein folgender Temperierungs- und/oder Formungsschritt durchgeführt.

Eine weitere Konstruktionsvorschrift sieht vor, dass die Enden eines Schlauchrohlings in einem frühen Verfahrensschritt durch Streckung in Längsrichtung auf einen dünnen Durchmesser verformt werden.

Schließlich entspricht es der Lehre der Erfindung, dass wenigstens ein Mittelbereich eines Schlauchrohlings in einem späten Verfahrensschritt durch radiales Aufblasen auf einen dicken Durchmesser verformt wird.

Weitere Merkmale, Einzelheiten, Vorteile und Wirkungen auf der Basis der Erfindung ergeben sich aus der folgenden Beschreibung bevorzugter Ausführungsformen der Erfindung sowie anhand der Zeichnung. Hierbei zeigt:

Fig. 1     eine schematische Darstellung eines längsgeteilten Formwerkzeuges mit vertikal übereinander angeordneten Formungskavitäten;

Fig. 1A     eine schematische Darstellung eines geneckten Schlauchrohlings;

Fig. 2     eine schematische Darstellung eines Formwerkzeuges mit horizontal angeordneten Formungskavitäten;

Fig. 3     eine schematische Darstellung eines Formwerkzeuges mit einem räumlich ausgesparten "kalten" Temperierungsbereich;

Fig. 4     eine schematische Darstellung eines Formwerkzeuges mit einem zusätzlichen, separat geregelten Temperierungsbereich;

Fig. 5     einen Schnitt quer durch zwei Hälften eines entlang seiner Längsachse geteilten Formwerkzeugs gemäß Fig. 2; sowie

Fig. 6     eine der Fig. 5 entsprechende Darstellung einer wiederum abgewandelten Ausführungsform der Erfindung.

Fig. 7     den zeitlichen Verlauf der Temperatur während des Blasformens eines Ballon- oder Hohlkörpers mittels einer erfindungsgemäßen Vorrichtung;

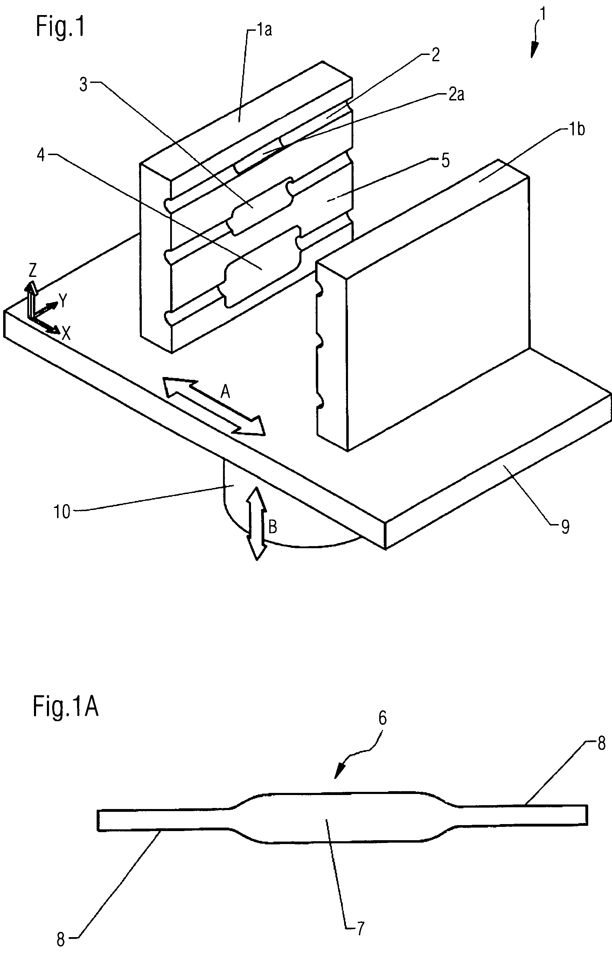

In Fig. 1 nicht zu sehen ist eine Fixiervorrichtung für einen Schlauchrohling 6, um diesen in einer gestreckten und mehr oder weniger gespannten Position zu halten. Diese Fixiervorrichtung kann zwei endseitige Zentrierungen für einen Schlauchrohling 6 aufweisen, bspw. V-förmige Vertiefungen, worin die Enden 8 eines Schlauchrohlings 6 eingelegt und damit automatisch einer Mittenposition zugeführt werden, sowie zwei endseitige Klemmvorrichtungen, worin je ein Ende des Schlauchrohlings 6 fixiert wird, insbesondere in einer jeweils zentrierten Position. Ferner umfasst eine solche Fixiervorrichtung eine Spanneinrichtung, um die beiden Klemmvorrichtungen bei Bedarf voneinander zu entfernen und dadurch den Schlauchrohling einer Dehnungsspannung zu unterwerfen. In einem solchermaßen gespannten Zustand erstreckt sich der Schlauchrohling bei der Anordnung nach Fig. 1 insbesondere in Y-Richtung. Die Fixiereinrichtung ist nicht an dem Träger 9 für das eigentliche Formwerkzeug 1 befestigt.

Das Formwerkzeug 1 besteht aus zwei Formenhälften 1a, 1b und weist im dargestellten Beispiel drei verschiedene, vertikal übereinander angeordnete Formkavitäten 2 bis 4 auf. Das Formwerkzeug-Teil 1a entspricht dabei einer Hälfte einer in Längsrichtung zweigeteilten Blasform. Die zweite Hälfte 1b ist spiegelsymmetrisch zur ersten Hälfte aufgebaut. Durch die Längsteilung des Formwerkzeuges 1 kann die Form über dem Schlauchrohling 6 durch seitliches Verfahren der Formhälften geöffnet und geschlossen werden, insbesondere in einer Richtung rechtwinklig zur Schlauchachse - Pfeil A oder lotrecht zu der Schließfläche 5 der Formenhälfte 1a, 1b.

Die Werkzeughälften 1a und 1b sind auf einem vertikal in Z-Richtung (im rechten Winkel zum Rohling 6) beweglichen Träger 9 angeordnet. Zum Öffnen und Schließen der Form 1 können auf dem Träger 9 beispielsweise Führungsschienen angeordnet sein, in oder um welche schlittenförmig ausgestaltete Bereiche der beiden Formhälften greifen, so dass den Formhälften 1 a, 1 b gegenüber dem Träger 9 nur eine geführte Parallelverschiebung entlang der Führungsschienen - nämlich in Richtung des Pfeils A - möglich ist. Zum aktiven Antrieb der Formhälften 1 a, 1 b kann / können beispielsweise nicht dargestellte Spindeln dienen, welche von einem Antriebsmotor in Drehung versetzt wird / werden. Für die notwendigen, entgegengesetzt gerichteten Bewegungen kann entweder eine gemeinsame Spindel verwendet werden, deren beeiden Hälften entgegengesetzte Steigungen aufweisen, oder zwei Spindeln, welche in entgegengesetztem Drehsinn angetrieben werden.

Der Träger 9 kann beispielsweise pneumatisch, hydraulisch oder elektrisch betrieben bewegt bzw. in vertikaler Richtung (Z-Richtung) verfahren werden. Hierzu dient eine schematisch wiedergegebene Verstelleinheit 10 zum gemeinsamen Verfahren der beiden Werkzeughälften 1 a und 1 b in vertikaler Richtung gemäß Pfeil B.

Diese Verstelleinheit 10 erlaubt es, den Rohling bei geöffneten Werkzeughälften 1 a, 1 b von einer Formkavität 2, 3, 4 in eine andere zu bewegen, nämlich in Richtung des Pfeils B. Auf diese Weise können ansonsten separate Arbeits- und Formungsschritte innerhalb eines einzigen Werkzeugs 1a, 1b bzw. mit nur einer einzigen Fixierung des Rohlings 6 prozessoptimiert zusammengefasst bzw. in ihrem jeweiligen Formungsergebnis zeitlich und qualitativ optimiert werden.

Wie die nicht dargestellte Einrichtung zum Schließen und Öffnen des Formwerkzeugs 1 kann auch die Verstelleinheit 10 eine Führungseinrichtung zur Parallelführung des Trägers 9 aufweisen - beispielsweise vertikale Führungsschienen einerseits und damit korrespondierende Führungsschlitten an dem Träger 9 andererseits - sowie eine Antriebseinrichtung, um den Träger 9 zu verfahren und an wohldefinierten Positionen stillzusetzen - beispielsweise eine vertikale, angetriebene Spindel und eine darauf geschraubte Spindelmutter andererseits, die ihrerseits drehbeweglich an dem Träger 9 gelagert ist. Andererseits können zum Antrieb beispielsweise auch Hydraulikzylinder od. dgl. verwendet werden.

Die jeweils zur Gegenhälfte hin gerichteten Schließflächen 5 der beiden Formhälften 1a und 1b sind bei dieser Ausführungsform mit je einer horizontal über die Fläche 5 durchgehend verlaufenden, nutartigen "Neckungs-Kavität" 2 zur Neckung des Schlauchrohlings versehen. Der unbearbeitete Schlauchrohling wird in die Kavität aufgenommen und gleichförmig, der Formwandung nahe anliegend, mit einem dazwischen befindlichen Querschnittsspalt von in der Summe vorzugsweise etwa 0,1 bis 0,8 mm und besonders bevorzugt 0,1 bis 0,3 mm anliegend, auf ein zur anschließenden Verformung des Rohlings 6 erforderliches Niveau durchwärmt.

Durch beidseitige symmetrische Streckung mittels der oben erwähnten, in der Zeichnung nicht wiedergegebenen Spannvorrichtung werden die seitlichen Rohlinganteile 8 ähnlich einer plastischen Ausziehung einer zähflüssigen Glaskapillare, auf einen geringeren Außendurchmesser reduziert. Der solchermaßen geneckte, d.h. mit verjüngten Enden 8 versehene Rohling 6 ist schematisch in Fig. 1A dargestellt. Dessen mittleres Segment 7 weist eine größere Wandstärke auf als die durch die Verformung gestreckten Endbereiche 8. Dies rührt daher, weil der mittlere Abschnitt 7 wegen der in dem betreffenden Abschnitt 2a querschnittlich reduzierten Kavität 2 weniger verformt wird als die Enden 8. Denn die Necking-Kavität 2 ist bevorzugt derart bemessen, dass sie im mittleren, später den Ballon ausformenden Teil 2a bündig über dem Rohling 6 schließt bzw. diesen unter möglichst gleichförmiger Krafteinwirkung in der geschlossenen Form 1 klemmt. Der Rohling 6 ist daher während des seitlichen Ausziehens seiner Enden 8 in seinem mittleren Bereich 7 in dem verjüngten Bereich 2a der Formkavität 2 fixiert.

Während die lateralen Segmente 8 bei diesem ersten Formungsschritt hinsichtlich ihres Durchmessers auf das Schaftmaß des tragenden Katheters eingestellt werden, auf welchen sie später appliziert werden, soll der mittlere, zunächst unverformte Abschnitt 7 des Rohlings später den eigentlichen Ballon entwickeln.

Das Temperieren und Necken der seitlichen, später den Ballonschaft ausformenden Rohlinganteile 8 innerhalb der Kavität 2 kann auch ohne einen klemmenden, den Rohling 6 fixierenden Bereich 2a erfolgen, indem sich die Werkzeughälften 1a und 1 b über dem entsprechenden seitlichen Anteil 8 schließen, diesen erwärmen, und dann durch laterale Streckung des Rohlings 6 nur in dem erwärmten Anteil dessen Abneckung bzw. Ausdünnung herbeigeführt wird. Im Anschluss wird der gegenüberliegende seitliche Anteil 8 des Rohlings 6 durch horizontales Verfahren innerhalb der Kavität 2 entsprechend erwärmt und geneckt.

Die Vorwärm-Kavität 3 nimmt anschließend den geneckten Rohling 6 auf. Sie ist derart proportioniert, dass sie sich dem Rohling 6 auf ein Querschnitt-Spaltmaß von in der Summe vorzugsweise 0,1 bis 0,8 mm, und besonders bevorzugt 0,1 bis 0,3 mm anschmiegt und ein Längenübermaß von vorzugsweise ca. 1 bis 3 mm, bevorzugt 1 bis 2 mm aufweist. Damit die beiden Formhälften 1 a, 1 b präzise über den bereits vorgeformten Rohling 6 geschlossen werden können, kann während der Schließphase der Schlauchrohling 6 vorübergehend überstreckt und/oder entlüftet werden. Der Rohling 6 wird in dieser quasi maßgeschneiderten Kavität 3 in, im Vergleich zu herkömmlicher Formungstechnik, deutlich verkürzter Zeit effizient und homogen durchwärmt.

Die Endform-Kavität 4 nimmt schließlich den durchwärmten, geneckten Rohling 6 in sich auf. Mit dem Schließen der Formhälften 1 a und 1 b über dem Rohling 6 beginnt die Temperierung des Formwerkzeuges 1 vom Vorwärmungs-Temperaturniveau auf das abschließende Formungs-Temperaturniveau. Simultan zum Wechsel des Temperierungsniveaus erfolgt in der Regel eine weitere axiale Streckung des Rohlings 6 sowie eine Beaufschlagung des Rohling-Innenlumens mit dem Blasdruck. Der Rohling 6 entwickelt sich in die Konturen der Blasform 4 hinein, wird an der Forminnenwandung temperiert und anschließend durch Kühlung in seiner Form fixiert (thermoplastische Verformung).

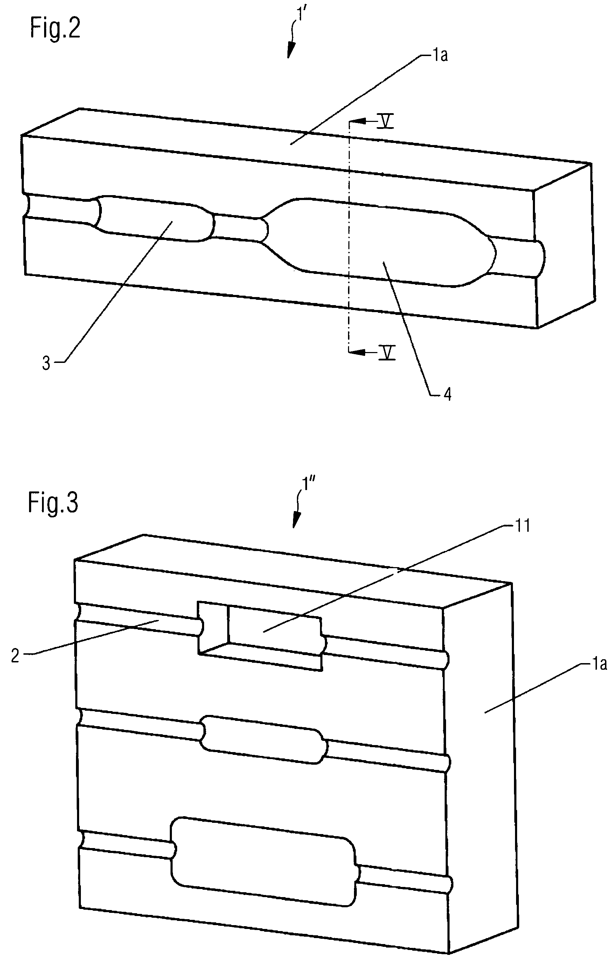

Alternativ zu einer relativen vertikalen Verstellung in Richtung B zwischen Schlauchrohling 6 und Formwerkzeug 1 kann ein ähnlicher Optimierungseffekt hinsichtlich Homogenität und Effektivität bei der Temperierung auch durch eine horizontale Anordnung der Werkzeugkavitäten 3, 4 über der Längsachse des Schlauchrohlings 6, also in Richtung der Y-Achse gemäß Fig. 1, erreicht werden. Fig. 2 zeigt eine entsprechende beispielhafte Anordnung eines Formwerkzeugs 1' mit Formkavitäten 3 bis 4. Wie bei der Verschiebung des Werkzeugs 1 in vertikaler Richtung B, so ist auch beim relativen Verfahren in Längsrichtung Y zwischen Rohschlauch 6 und Werkzeug 1' die sequentielle Abarbeitung mehrerer Arbeitsschritte und Formungsphasen in speziell für diese Schritte und Phasen dimensional optimierten Formkavitäten 3, 4 möglich, ohne dabei den Rohling 6 aus der Streck- und Blasvorrichtung entnehmen, mit dem Rohling 6 zu einer anderen Formungsvorrichtung zu wechseln und den Rohling 6 dort wieder neu einspannen zu müssen.

Fig. 3 zeigt eine beispielhafte Ausführungsform eines Formwerkzeuges 1", bei welchem einzelne Anteile der Form bzw. der Kavitäten 2, 3, 4 von der Temperierung ausgeschlossen sind. Durch eine entsprechende Kammerung 11 des medium-durchströmten Raumes können bestimmte Segmente der Formungsfläche 2 vom Temperierungsmedium getrennt werden, wodurch sich diese Anteile praktisch "kalt" verhalten. Eine derartige Kammerung 11 kann beispielsweise beim Abnecken eines Rohlings 6 nützlich sein. Der mittlere Anteil 7 des Rohlings 6 kann auf diesem Weg kalt gehalten werden, während lediglich die lateralen Anteile 8 der Neckungskavität 2 erwärmt werden.

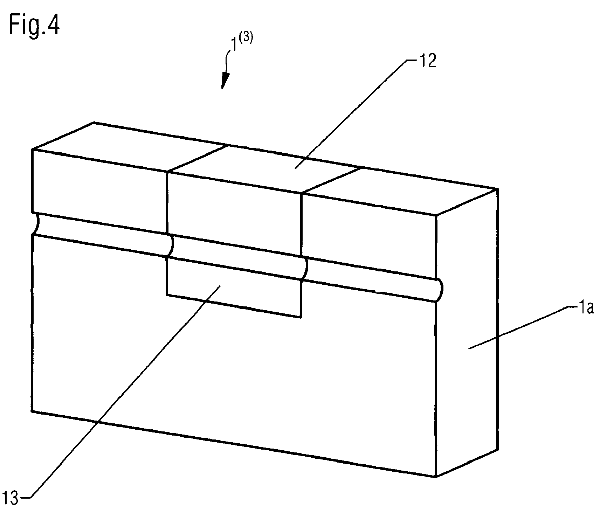

Fig. 4 beschreibt eine weitere Ausführung des Formwerkzeuges 1(3), bei dem einzelne Anteile 12 der Form bzw. der Kavitäten separat temperiert werden können. Durch entsprechende Kammerung des medium-durchströmten Raumes können derartige separierte Anteile der Form von einem umgebenden Temperierungsmedium getrennt werden, und durch entsprechende Perfusion mit einem temperaturkonstanten Medium anderer Temperatur kontrolliert durchspült bzw. erwärmt oder gekühlt werden. Eine gekammerte oder separierte Temperierung kann wiederum beispielsweise beim Abnecken eins Rohlings 6 von Vorteil sein. Der mittige, nicht auszuziehende Anteil 7 des Rohlings 6 kann durch eine entsprechende Kammerung 12 auf einem bestimmten Kühltemperatur-Niveau gehalten werden, wodurch sich die Reproduzierbarkeit und Stabilität des Prozesses im Verlauf eines bestimmten Zyklusschrittes erheblich verbessert. Zur weiteren Stabilisierung des abzuneckenden Rohlings 6 in der geschlossenen Form kann der mittige Anteil 7 des Rohlings 6 durch eine bedingt verformbare, beispielsweise gummierte Fläche 13 gegriffen und in seiner Position beim beidseitigen Ausziehen der Rohlingenden 8 fixiert werden.

Vorstellbar ist auch eine serielle Anordnung von radial geteilten Formkavitäten 3, 4, durch die der Rohling 6 axial hindurchgeführt wird. Entsprechend der Formung in der in Längsrichtung geteilten Form, wie in Fig. 2 dargestellt, erfolgt auch bei quer zur Achse des Rohlings 6 geteilten bzw. segmentierten Formwerkzeugen ein relativer Versatz zwischen Rohling und Werkzeug. Durch entsprechendes axiales Verfahren des Rohlings 6 kann dieser beispielsweise in einer Kavität 3, 4 vortemperiert und anschließend in einer axial von dieser versetzten weiteren Kavität auf sein Endmaß ausgeformt werden.

Die Formwandung des Werkzeugs 1, 1', 1", 1(3) bzw. der Werkzeughälften besteht vorzugsweise aus gesintertem Edelstahl, gesintertem Aluminium oder einem gesinterten nicht korrodierenden Stahl. Dies erfolgt vorzugsweise durch sogenanntes selektives Laser-Sintern (SLS). Denkbar sind auch konventionelle Sinterverfahren, bei denen durch Auftrag verschiedener Lagen von Sintermaterial im Kavitätsbereich sowohl eine flüssigkeitsdichte Barriere zum temperierenden Medium hergestellt werden kann, als auch eine poröse, zum Ballon hin orientierte Materiallage, die die Verdrängung der Luft in der Formhöhle bei der Entfaltung des Ballons durch die poröse Struktur des Formmaterials zur Formumgebung hin erlaubt.

Alternativ zum Sinterverfahren können entsprechende Formwerkzeuge auch durch Zerspanung und Gussverfahren aus den genannten Materialien hergestellt werden.

Idealerweise liegen die Wandstärken bei gesintertem Edelstahl im Formungsflächenbereich bei 1 bis 4 mm, vorzugsweise jedoch bei 1,5 bis 2,5 mm. Die dünnwandige Ausführung der Formwandung im Stärkenbereich von 1,5 bis 2,5 mm gestattet es, die Temperatur des Mediums etwa im Bereich von 5 bis 8 Grad Celsius über der zu erreichenden Temperatur auf der Formwandungsoberfläche einzustellen, und trotzdem Temperatursprünge auf der Formwandungsoberfläche von 100 Grad (von beispielsweise 60 auf 160 Grad) in ca. 10 bis 20 Sekunden zu erreichen. Durch die so ermöglichte rasche Temperierung bzw. den raschen Wechsel von einem Temperierungsniveau auf ein anderes, können Gesamtzykluslängen von ca. 3 bis 5 Minuten, wie sie bei der Verwendung von Polyamid bei konventioneller Formungstechnik die Regel sind, auf die Hälfte bzw. ein Drittel verkürzt werden. Eine weitere Zykluszeitverkürzung ergibt sich aus der erfindungsgemäßen beschleunigten homogenen Durchwärmung von Rohlingen 6 in maßangepassten, kontursymmetrischen Formungskavitäten, wodurch lange Temperierungsplateaus, wie bei konventioneller Werkzeugtechnik erforderlich, ebenfalls deutlich verkürzt werden können. Zudem erlaubt es die Verwendung eines konstant temperaturgeregelten flüssigen Mediums bei der Durchwärmung eines Rohlings 6, als auch bei der Ausformung des Rohlings 6 zum Ballon, die wirksame Energiemenge wirklich exakt konstant zu halten, und nicht, wie bei der Temperierung mit beispielsweise im Werkzeug 1 integrierten oder werkzeugnah angebrachten elektrischen Heizkartuschen erforderlich, durch intermittierende Zufuhr von Wärmeenergie die gewünschte Temperatur quasi pulsend aufrecht zu erhalten.

Das Formwerkzeug 1 ist vorzugsweise hohl ausgebildet und kann von einem temperierungsmedium durchströmt werden; die Formwandung kann beispielsweise aus einem gesinterten Stahl-Gehäuse mit zwei etwa konturparallelen Formflächen mit einer Wandstärke von jeweils etwa 2 mm bestehen, welche an ihren Rändern miteinander verbunden sind sowie ggf. auch über die Formfläche verteilt über bspw. pin-artige Zylindern oder Stifte miteinander verbunden sind, bspw. mit einem Durchmesser von 3 mm und einer Höhe von 5 mm, bei einer Beabstandung der Pins zueinander von bspw. ca. 10 mm. Der Fluss des Mediums (flüssiges Wasser oder Öl) hängt vom Volumen der Form ab, beträgt aber typischerweise etwa 10 l/min.

Wie weiter oben bereits angedeutet, ist ein Formwerkzeug 1, 1', 1", 1$^{(3)}$ vorzugsweise entlang seiner Längsachse - bspw. entlang einer vertikalen Längsebene - in zwei Hälften 1 a, 1 b geteilt, die sodann in vorzugsweise horizontaler Richtung A zusammen fahrbar sind, um das Formwerkzeug 1 zu schließen, und wieder auseinander fahrbar sind, um die Form 1 wieder zu öffnen.

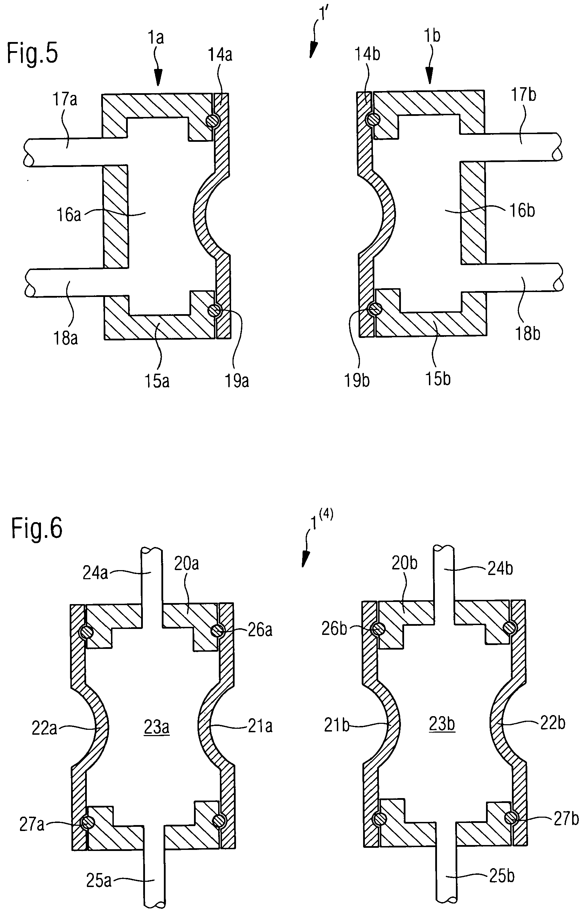

Wie Fig. 5 zeigt, können dabei die eigentlichen Formflächenhälften 14a, 14b dabei jeweils lösbar an einem beweglich gelagerten Chassis 15a, 15b festgelegt sein, bspw. angeschraubt. Ein solches Chassis 15a, 15b kann bspw. die Form eines einseitig offenen Trogs aufweisen, dessen offene Seite von der betreffenden Formflächenhälfte 14a, 14b verschlossen wird. Innerhalb des dabei umschlossenen Hohlraums 16a, 16b kann dann das Temperierungsmedium fließen, welches über Leitungen 17a, 17b, 18a, 18b zu- und abgeleitet wird. Damit dieses Medium nicht entlang der Stoßfuge zwischen Chassis 15a, 15b und Formflächenhälfte 14a, 14b entweichen kann, ist dazwischen je eine rundumlaufende Dichtung 19a, 19b vorgesehen, bspw. in eine rundumlaufende Nut oder Mulde eingelegt. Man erkennt, dass es auf diesem Weg leicht möglich ist, sehr dünne Formflächenhälften 14a, 14b von bspw. 2 mm zu realisieren.

Die Fig. 6 zeigt eine Weiterentwicklung dieses Prinzips. Hierbei ist anstelle der Chassis 15a, 15b jeweils ein beispielsweise rechteckiger Rahmen 20a, 20b vorgesehen, welcher beweglich gelagert oder geführt ist, insbesondere in einer Richtung aufeinander zu bzw. voneinander weg entsprechend Pfeil A aus Fig. 1. Dabei ist nicht nur an den einander zugewandten Stirnseiten dieser beiden Rahmen 20a, 20b jeweils eine Formflächenhälfte 21a, 21b festgelegt, sondern auch an der jeweils außen liegenden Stirnseite ein weiteres Inlay 22a, 22b, dessen Querschnitt vorzugsweise mit der betreffenden Formflächenhälfte 21 a, 21 b identisch oder dazu spiegelverkehrt ist. Wie Fig. 6 weiter zu entnehmen ist, kann das Temperierungsmedium dem von dem Rahmen 20a, 20b, der jeweiligen Formflächenhälfte 21a, 21b und dem jeweils außen festgelegten Inlay 22a, 22b umschlossenen Hohlraum 23a, 23b in diesem Fall mittels den Rahmen 20a, 20b durchsetzender Leitungen 24a, 24b, 25a, 25b zu- und von diesem wieder abgeleitet werden. Damit das Temperierungsfluid nicht entweichen kann, sind sowohl die Formflächenhälften 21a, 21b als auch die außen festgelegten Inlays 22a, 22b durch je eine rundumlaufende Dichtung 26a, 26b, 27a, 27b gegenüber dem Rahmen 20a, 20b abgedichtet.

Die Ausführungsformen gemäß den Fig. 5 und 6 haben den Vorteil, dass für die Herstellung unterschiedlicher Ballons nur minimale Veränderungen an der dazu verwendeten Apparatur erforderlich sind, indem nämlich jeweils nur die Formflächenhälften 14a, 14b bzw. 21a. 21b sowie ggf. die dazu identischen oder komplementären Inlays 22a, 22b ausgetauscht werden.

Die Ausführungsform gemäß Fig. 6 hat zudem den Vorteil, dass aufgrund grundsätzlich gleicher, d.h. beispielsweise spiegelbildlicher Strukturen jeweils einer Formflächenhälfte 21a, 21b und des jeweils zugeordneten Inlays 22a, 22b an letzteren völlig gleiche Temperaturverläufe auftreten wie an der jeweils zugeordneten Formflächenhälfte 21a, 21b. Diese sogenannte Kontursymmetrie erlaubt eine gute, d.h. präzise, großflächige, vollständige Beobachtbarkeit der Forminnentemperatur anhand der damit fast identisch übereinstimmenden Formaußentemperatur.

Ein ähnliches Verhalten - also gleiche Temperaturverläufe an der Forminneneite und an der Formaußenseite ließen sich auch erzeugen, wenn die Inlays 22a, 22b an den Außenseiten der Formhälften 1a, 1b nicht spiegelbildlich zu der jeweils betreffenden Formflächenhälfte 21a, 21b an der Innenseite der betreffenden Formhälfte 1 a, 1 b sind, sondern identisch mit jenen. Bei der Anordnung nach Fig. 6 ließe sich dies bspw. erreichen, wenn das Inlay 22b mit dem Inlay 22a bei ansonsten gleicher Orientierung ausgetauscht würde, so dass die Inlays 22a, 22b in Fig. 6 nicht nach innen gewölbt sind, sondern jeweils nach außen. Daraus resultiert dann eine nahezu identische Breite bzw. Dicke der Hohlräume 23a, 23b über die gesamte Fläche der Formflächenhälften 21 a, 21 b.

Eine solche Anordnung mit in gleiche Richtungen gewölbten Forminnen- und - außenseiten und also etwa konstanter Dicke der Hohlräume für das Temperierungsmedium kann natürlich auch durch selektives Laser-Sintern (SLS) erzielt werden. Dies hat den weiteren Vorteil, dass auch komplexe Strukturen innerhalb der Hohlräume 23a, 23b erzeugt werden können, bspw. Verbindungsstifte zum gegenseitigen Abstützen der Forminnen- und -außenseite aneinander, oder Entlüftungsrohre, welche innerhalb einer Kavität 2, 3, 4 münden und durch den Hohlraum 23a, 23b bis zu einem Anschluss führen, wo bspw. eine Unterdruckquelle anschließbar ist, um den Zwischenraum zwischen dem Schlauchrohling 6 und der Kavität 2, 3, 4 aktiv zu entlüften.

Weil darüber hinaus die Formflächenhälften 14a, 14b bzw. 21a, 21b sehr dünnwandig sind, ist ein vergleichsweise kleiner Temperaturgradient von bspw. 10 °C bis 12 °C oberhalb (bei Erwärmung) bzw. unterhalb (bei Abkühlung) der jeweils gewünschten Forminnentemperatur völlig ausreichend, um in einem kürzesten Zeitraum von einigen Sekunden die Forminnentemperatur auf ein gewünschtes Temperaturniveau zu treiben:

$$T_{Form} = T_{Vorlauf} \pm 8...12\ °C \quad (1)$$

Dies bedeutet, dass sich die Forminnentemperatur $T_{Form}$ nach einem relativ kurzen Zeitraum von bspw. 30 sec. nach einem Temperatursprung bereits innerhalb eines sehr engen Toleranzbandes $T_B = [-T_{UG}; T_{OG}]$ um die Vorlauftemperatur $T_{Vorlauf}$ befindet, wobei $T_{UG} > 0$, $T_{OG} > 0$. Wenn man daher die Vorlauftemperatur $T_{Vorlauf}$ ohne overshoot auf den gewünschten Temperatursollwert $T_{Soll}$ einstellt, indem ausreichend Medium mit dieser Temperatur bevorratet wird, so hat die Forminnentemperatur $T_{Form}$ als Temperaturistwert $T_{Ist}$ bereits nach 30 sec. oder weniger einen Temperaturwert innerhalb des Toleranzbandes erreicht:

$$T_{Soll} - T_{UG} = T_{Vorlauf} - T_{UG} \leq T_{Ist} = T_{Form} \leq T_{Soll} + T_{OG} = T_{Vorlauf} + T_{OG} \quad (2)$$

Aufgrund der erfindungsgemäß relativ dünnwandigen Form sind bei der Erfindung die Grenzwerte $-T_{UG}$, $T_{OG}$ des Toleranzbandes $T_B$ sehr eng. Beispielsweise kann $T_{UG} \leq 12\ °C$ sein, vorzugsweise $T_{UG} \leq 10\ °C$, insbesondere $T_{UG} \leq 8\ °C$, jeweils gemessen nach 30 sec. oder gar vorzugsweise bereits nach 20 sec. Ferner kann $T_{OG} \leq 12\ °C$ sein, vorzugsweise $T_{OG} \leq 10\ °C$, insbesondere $T_{OG} \leq 8\ °C$, ebenfalls nach 30 sec. oder gar vorzugsweise bereits nach 20 sec. gemessen. Jedoch wird insbesondere der untere Grenzwert $T_{UG}$ nicht zu null, weil die Form stets Wärme abstrahlt und daher ein kontinuierlicher Energieverlust entsteht, der in einer bleibenden Temperaturdifferenz zwischen Vorlauftemperatur $T_{Vorlauf}$ und Forminnentemperatur $T_{Form}$ resultiert. Daher gilt im Allgemeinen $T_{UG} \geq 2\ °C$ sein, vorzugsweise $T_{UG} \geq 4\ °C$, insbesondere $T_{UG} \geq 6\ °C$, jeweils gemessen nach 30 sec. oder gar vorzugsweise bereits nach 20 sec.

Die Vorteile dieser Maßnahme lassen sich am besten an einem bevorzugten Werkstoff für einen Ballonrohling beschreiben, wie aromatische, äther-basierte Polyurethansorten, wie z.B. "Pellethane". Dieses Material sollte zur Fixierung möglichst auf einen Temperaturbereich von etwa $T_{Form} = 152$ bis $158\ °C$ erhitzt und dort ausgeformt werden; zu hohe formwirksame Temperaturen lassen das fertige Produkt zu weich werden und führen zu einem partiellen Verlust der angestrebten Druck- und Formstabilität. Das Material geht bei Temperaturen über 165 °C sukzessive in den amorphen, ungeordneten Zustand über, die durch die axiale und radiale Streckung erreichte Ausrichtung der Polymerketten geht verloren. Bei ca. 185 °C schmilzt das Material, was unbedingt vermieden werden muss.

In der Regel stellt sich ein optimales Formungsergebnis ein, wenn der aus der Form entnommene Ballon eine allseitige Retraktion von ca. 8 bis 12 % unter das Formmaß zeigt. Er weist dann die gewünschten mechanischen Charakteristika, wie Formstabilität unter steigendem Fülldruck und mechanische Beständigkeit, auf.

Optimale Ergebnisse erzielt man, wenn die Vorlauftemperatur $T_{vorlauf}$ in einem Bereich von 160 bis 165 °C gewählt wird. Dies hat im Gegensatz zu bisherigen Verfahren, wo Vorlauftemperaturen $T_{vorlauf}$ von bis zu 195 °C oder darüber erforderlich waren, den Vorteil, dass selbst bei einem zu langen Verbleiben in der Form zur bestmöglich homogenen Durchwärmung niemals die Schmelztemperatur von 185 °C erreicht oder gar überschritten werden kann, ja nicht einmal der unerwünschte Erweichungsbereich oberhalb von 165 °C.

Bei einer Fertigungssequenz werden insgesamt drei verschiedene Temperaturniveaus auf der Oberfläche der Forminnenwandung wirksam, nämlich die Vorformungstemperatur $T_{Vorformung}$, bspw. $T_{Vorformung} = 45\ °C$, daneben die End- oder Ausformungstemperatur $T_{Ausformung}$, bspw. $T_{Ausformung} = 155\ °C$, und die Abkühltemperatur $T_{Abkühlung}$, bspw. $T_{Abkühlung} = 25\ °C$.

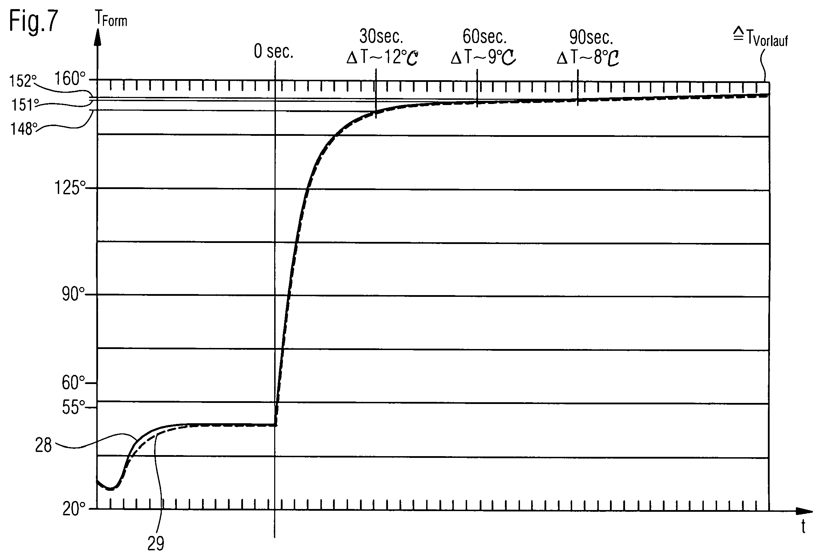

Eine typische Temperatursequenz für die Herstellung eines Ballon- oder Hohlkörpers ist in Fig. 7 wiedergegeben, wobei außerdem zu erkennen ist, dass die Temperatur an der Innenseite der Form 1 (Kurve 28) bis auf weniger als 3 °C mit der jeweiligen Temperatur an der Außenseite der Form 1 (Kurve 29) übereinstimmt.

Wie in Fig. 7 beispielhaft gezeigt, nähert sich die wirksame Formtemperatur (gemessen auf der Forminnenseite) der Vorlauftemperatur von in diesem Falle 160 °C asymptotisch, über 30 sec, 60 sec und 90 sec, bis auf wenige Grad Differenz. Infolge des dabei sehr langsamen zeitlichen Temperaturgradienten kann die Temperatur an der Forminnenseite im Idealfall auf das Grad genau eingestellt werden, insbesondere auch deshalb, weil die dortige Temperatur in fast vollkommen identischer Weise gleichzeitig an der Formaußenwand abgelesen werden kann, bspw. mit einem Infrarot-Meßgerät.

Es ist daher beispielsweise möglich, die Formaußenseite mit einer Wärmebildkamera zu beobachten und aufzunehmen und daraus die Temperatur an der Formaußenseite zu ermitteln. Da - wie oben ausgeführt - bei Kontursymmetrie zwischen Forminnenseite und Formaußenseite die Temperatur an der Forminnenseite mit derjenigen an der Formaußenseite hinsichtlich einander zugeordneter Oberflächenbereiche nahezu bis auf das Grad genau übereinstimmt, kann man daraus dann die Temperatur an der Forminnenseite ableiten.

Da diese Identitätsbedingung zumindest bereichsweise für die gesamte Formaußen-und -innenseite gilt, kann man durch derartige thermographische Messungen insbesondere auch die Gleichmäßigkeit der Erwärmung über die gesamte Oberfläche des Schlauchrohlings 6 zweidimensional überprüfen bzw. überwachen.

Darüber hinaus ist auf diesem Weg auch eine Verfolgung der Temperaturentwicklung entlang der Zeitachse möglich, beispielsweise indem das Bildsignal einer kontinuierlich arbeitenden Wärmebildkamera auf ein Speichermedium aufgezeichnet wird. Solchenfalls steht ein derartiger Film anschließend zu Dokumentationszwecken zur Verfügung oder kann als Referenz verwendet werden, Da der Temperaturverlauf während eines Zyklus im eingeschwungenen Zustand und bei etwa konstanten Umwelteinflüssen wiederholbar bzw. durch eine genaue Zeitsteuerung reproduzierbar ist, genügen dann gegebenenfalls in regelmäßigen Zeitabständen durchgeführte Kontrollmessungen, um die Einhlatung von Verfahrensparametern dauerhaft zu gewährleisten, ggf. mit einzelnen Temperatursensoren. Andererseits lässt sich eine Referenzmessung ggf. zur Kalibrierung derartiger Temperatursensoren verwenden.

Andererseits erlaubt eine solche zeitabhängige Messung des Temperaturverlaufs, zumindest näherungsweise die Zeitabhängigkeit der thermischen Übertragungskurve der erfindungsgemäßen Ballon-Formvorrichtung zu ermitteln. Man kann dabei ggf. so vorgehen, dass man bei einem Temperatursprung am Zulauf des Temperierungsmediums - also beispielsweise durch Umschalten zwischen zwei verschiedenen, bevorrateten Medien unterschiedlicher Temperatur - die zeitliche Temperaturänderung an einem beliebigen, interessierenden Punkt der Formaußenseite misst, und die sich daraus ergebende Kurve durch eine Exponentialfunktion approximiert ($PT_1$-Verhalten). Sodann kann man daran eine Zeitkonstante $\tau$, bspw. in Form einer "Halbwertszeit" ablesen - bei den Kurven 28, 29 aus Fig. 7 etwa 8 Sekunden - innerhalb welcher sich der gemessene Temperaturwert dem Sollwertsprung am Eingang um die Hälfte angepasst hat. Eine solche Zeitkonstante $\tau$ wird besonders durch die zu erwärmenden Massen beeinflusst und ist daher für die dünnwandige Ausführungsform der Erfindung charakteristisch.

Das Temperierungsverhalten der Form 1 kann annähernd durch die folgende Gleichung beschrieben werden, wobei $T_\Delta$ die bleibende Differenz zwischen der Vorlauftemperatur $T_{Vorlauf}$ und der Temperatur $T_{Form}$ an der Forminnenwand ist, welche durch z.B. kontinuierliche Wärmeabgabe an die Umgebung bedingt ist:

$$T_{Form}(t) = T_{Vorlauf} * [1 - e^{-t/\tau}] - T_\Delta \quad (3)$$

Wie Fig. 7 erkennen läßt, kann $T_\Delta$ nach Ablauf eines Zeitintervalls von etwa 60 bis 120 sec. nach einem Temperatursprung der Vorlauftemperatur $T_{vorlauf}$ gemessen werden; es handelt sich dabei um den Grenzwert, gegen welchen die dynamische Temperaturdifferenz $\Delta T = T_{Vorlauf} - T_{Form}$ für $t \to \infty$ strebt.

Für $t \to \infty$ wird in Gleichung (3) der Klammerausdruck zu 1, und Gleichung (3) vereinfacht sich zu:

$$T_{Form}(t) = T_{Vorlauf} - T_\Delta \quad (4)$$

Ein Vergleich mit Gleichung (1) ergibt, dass die bleibende Temperaturdifferenz $T_\Delta$ innerhalb des Toleranzbandes $T_B = [-T_{UG}; T_{OG}]$ liegt, also gilt:

$$T_{UG} \leq T_\Delta \leq T_{OG} \quad (5)$$

Mit der Erfindung lassen sich durchaus mittlere "Halbwertszeiten", also über die Oberfläche der Form gemittelt, von $\tau \leq 20$ sec. erzielen, vorzugsweise "Halbwertszeiten" von $\tau \leq 15$ sec., insbesondere "Halbwertszeiten" von $\tau \leq 10$ sec. Das Temperatursignal erreicht nach $t = \tau$ 50 % eines Temperatursprungs s am Eingang, also $(1 - 1/2) * s$, nach $t = 2 * \tau$ bereits 75 %, also $(1 - 1/2 * 1/2) * s = 3/4 * s$, nach $t = 2 * \tau$ sogar 87,5 %, also $(1 - 1/2 * 1/2 * 1/2) * s = 7/8 * s$, wie man aus Fig. 7 gut ablesen kann.

Diese Zeitkonstante $\tau$ wurde bei einer Umgebungstemperatur von 20 °C gemessen sowie bei einem Vorlaufdruck des strömenden Temperierungsmediums von 3 bar, und die solchermaßen zu bestimmende Zeitkonstante $\tau$ ändert sich nicht wesentlich, solange der Vorlaufdruck größer ist als 2,5 bar, und/oder solange der Vorlaufdruck einen Wert von 4 bar nicht übersteigt.

Derart kurze mittlere Zeitkonstanten $\tau \leq 10$ sec. lassen sich mit herkömmlichen Blasformvorrichtungen nicht erreichen.

Die Erfindung beschreibt ferner ein Verfahren zur zyklusoptimierten und qualitativ optimierten Fertigung von Ballonkomponenten.

Das Verfahren wird hier nochmals anhand eines typischen, einen Neckungschritt umfassenden Polyamidballon-Formungsprozesses in allen Schritten dargestellt. Der Rohling 6 wird in eine Streck- und Blasvorrichtung eingespannt (nicht abgebildet). Anschließend erfolgt die Temperierung der lateralen Rohlinganteile 8 in einer Neckungskavität 2 bzw. in einem speziell für die Neckung optimierten Werkzeug, wie in Fig. 3 oder Fig. 4 dargestellt. Bei Erreichen der plastischen Verformbarkeit des Materials erfolgt das laterale Ausziehen der Ballonenden 8 durch axiale Streckung des Rohlings 6.

Nach Öffnen der Form 1 wird der geneckte Rohling 6 mittels der Verstelleinheit 10 aus der Kavität 2 entnommen und durch entsprechendes relatives Verfahren zwischen Rohling 6 und Werkzeug 1 in die Vorwärmungskavität 3 transportiert; sodann wird die Form 1 wieder geschlossen. In dieser, dem geneckten Rohling 6 allseitig mit möglichst gleichem Abstand konturnah angepassten Kavität 3 erfolgt dessen homogene Durchwärmung. Anschließend erfolgt - nach abermaliger Öffnung der Form 1 - ein nochmaliger Versatz des durchgewärmten Rohlings 6 in die Formungskavität 4, in der die formgebende Temperierung bzw. Ausformung zum fertigen Ballon stattfindet, nachdem die Form 1 wieder geschlossen wurde.

Für die prozessoptimierte Herstellung von beispielsweise Polyamid-Ballonkomponenten oder Ballons aus Materialien mit ähnlichen plastischen Formungseigenschaften stellt nicht zuletzt die Aufnahme des Neckungsschrittes in den eigentlichen Formungszyklus eine erhebliche Verbesserung dar. Der Rohling 6 wird so vom Bediener nur ein einziges Mal in die Streck- und Blasvorrichtung eingespannt, und durchläuft dann sequenziell und im Idealfall vollautomatisch alle erforderlichen Bearbeitungsschritte bis zu seiner vollständigen Ausformung und Entnahme.

Das vertikale Verfahren des Rohlings 6 über verschiedene Kavitäten 2, 3, 4 hinweg erlaubt im Gegensatz zu einem horizontalen Verfahren zudem deutlich kürzere Längen eines Rohlings 6. Prinzipiell ist beim vorgeschlagenen Verfahren jedoch sogar eine Kombination aus vertikal und horizontal gegeneinander versetzten Kavitäten 2, 3, 4 denkbar, wenn die Verstelleinrichtung 10 in der Lage ist, die Form 1 an die gewünschten Positionen relativ zu der Klemm- oder Fixiereinrichtung des Rohlings 6 zu transportieren.

Das Verfahren ist für sämtliche Blasformprozesse geeignet, deren Ergebnis hinsichtlich Zykluszeitoptimierung oder qualitativem Ausstoß in bedeutendem Umfang von einer möglichst homogenen Durchwärmung des zu verformenden Rohlings 6 abhängt.

## Bezugszeichenliste

| | | | |
|---|---|---|---|
| 1 | Formwerkzeug | 26 | Dichtung |
| 2 | Formkavität | 27 | Dichtung |
| 3 | Formkavität | 28 | Kurve |
| 4 | Formkavität | 29 | Kurve |
| 5 | Schließfläche | | |
| 6 | Rohling | | |
| 7 | Mittleres Segment | | |
| 8 | Laterales Segment | | |
| 9 | Träger | | |
| 10 | Verstelleinheit | | |
| 11 | Kammerung | | |
| 12 | Anteil | | |
| 13 | Gummierte Fläche | | |
| 14 | Formflächenhälfte | | |
| 15 | Chassis | | |
| 16 | Hohlraum | | |
| 17 | Leitung | | |
| 18 | Leitung | | |
| 19 | Dichtung | | |
| 20 | Rahmen | | |
| 21 | Formflächenhälfte | | |
| 22 | Inlay | | |
| 23 | Hohlraum | | |
| 24 | Leitung | | |
| 25 | Leitung | | |

**Patentansprüche**

1. Vorrichtung zur Herstellung einer Ballonkomponente vorzugsweise mit unterschiedlichen Durchmesserbereichen aus einem Schlauchrohling (6), insbesondere zur prozess- und zyklusoptimierten Blasformung einer Ballonkomponente für einen medizinischen Katheter, unter Temperierung des Rohlings (6) auf ein Verformungsniveau, anschließender Beaufschlagung mit einem Blasdruck bei optional gleichzeitiger Streckung des Rohlings (6), Ausformung des sich aufdehnenden Rohlings (6) in einer Formkavität (4) zu einem Ballon, anschließende Temperierung auf einem Ausformungsniveau, sowie schließlich Kühlung und Fixierung des geformten Ballons in seiner ausgeformten Gestalt, mit einer Einrichtung zum Fixieren, insbesondere Einspannen, eines Schlauchrohlings (6), und mit wenigstens einem Formwerkzeug (1), welches geteilt, vorzugsweise längsgeteilt gestaltet ist mit wenigstens zwei zum Öffnen und Schließen der Form (1) etwa lotrecht zu der Trennungsfläche oder -ebene (5) auseinander und zusammen fahrbaren Formhälften (1a,1b), **gekennzeichnet durch**

a) wenigstens eine Verstelleinheit (10) zur Verstellung der Relativposition zwischen der Einrichtung zum Fixieren eines Schlauchrohlings (6) und wenigstens einem Formwerkzeug (1) in einer Verstellrichtung (B) etwa innerhalb der Trennungsfläche oder -ebene (5) zwischen den zwei Formhälften (1a,1b),
b) mehrere Temperierungs- und/oder Formungskavitäten (2,3,4) in einem oder mehreren, gemeinsam verstellbaren Formwerkzeug(en) (1) für die Durchführung unterschiedlicher Temperierungs- und/oder Formungsschritte, insbesondere jeweils mehrere Paare von in beiden Formhälften (1a,1b) eingeformten Temperierungs- und/oder Formungskavitäten (2,3,4), welche einen gegenseitigen Versatz entlang der Verstellrichtung (B) aufweisen.

2. Vorrichtung nach Anspruch 1, **dadurch gekennzeichnet, dass** die Verstelleinheit (10) als vertikale Hubeinheit oder als horizontale Verfahreinheit ausgebildet ist.

3. Vorrichtung nach Anspruch 1 oder 2, **dadurch gekennzeichnet, dass** verschiedene Temperierungs- und/oder Formungskavitäten (2,3,4) jeweils voneinander getrennte Temperierungshohlräume (16a,16b;23a,23b) und/oder voneinander getrennte Zu- und Abläufe (17a,17b,18a,18b;24a,24b,25a,25b) für ein Temperierungsmedium aufweisen.

4. Vorrichtung nach einem der vorhergehenden Ansprüche, **dadurch gekennzeichnet, dass** verschiedene Temperierungs- und/oder Formungskavitäten (2,3,4,11,12,13) voneinander getrennt und/oder thermisch gegeneinander isoliert sind.

5. Vorrichtung nach einem der vorhergehenden Ansprüche, **dadurch gekennzeichnet, dass** die Form (1) an ihrer Innenseite (5) eine Wandstärke von 5 mm oder weniger aufweist, beispielsweise von 4 mm oder weniger, vorzugsweise von 3 mm oder weniger, insbesondere von 2,5 mm oder weniger.

6. Vorrichtung nach einem der vorhergehenden Ansprüche, **dadurch gekennzeichnet, dass** das Temperierungsverhalten des Formwerkzeugs (1), also das Zeitverhalten der über die Oberfläche der Forminnenseite gemittelten Forminnentemperatur $T_{Form}$ in Abhängigkeit von der Vorlauftemperatur $T_{Vorlauf}$ des strömenden Temperierungsmediums, näherungsweise einem Verzögerungsglied erster Ordnung ($PT_1$-Glied) entspricht, mit einer Zeitkonstante ($\tau$), die - gemessen bei einer Umgebungstemperatur von 20 °C und einem Vorlaufdruck des strömenden Temperierungsmediums von 3 bar - gleich oder kleiner ist als 20 sec.:

$$\tau \leq 20 \text{ sec.,}$$

vorzugsweise kleiner als 15 sec.:

$$\tau \leq 15 \text{ sec.,}$$

insbesondere kleiner als 10 sec.:

$$\tau \leq 10 \text{ sec.}$$

7. Verfahren zur Herstellung einer Ballonkomponente vorzugsweise mit unterschiedlichen Durchmesserbereichen aus einem Schlauchrohling (6), insbesondere zur prozess- und zyklusoptimierten Blasformung einer Ballonkomponente für einen medizinischen Katheter, unter Verwendung unter einer Einrichtung zum Fixieren, insbesondere Einspannen, eines Schlauchrohlings (6), und wenigstens eines Formwerkzeugs (1), welches in entlang einer Trennungsfläche oder -ebene (5) in zwei Formhälften (1a,1b) geteilt, insbesondere längsgeteilt ist, welche in einer Richtung etwa lotrecht zu der Trennungsfläche oder -ebene (5) des Formwerkzeugs (1) auseinanderfahrbar sind, unter Einspannen eines Schlauchrohlings (6), Schließen des Formwerkzeugs (1) um den eingespannten Schlauchrohling (6), Temperierung des Rohlings (6) auf ein Verformungsniveau, anschließender Beaufschlagung mit einem Blasdruck bei optional gleichzeitiger Streckung des Rohlings (6), Ausformung des sich aufdehnenden Rohlings (6) in einer Formkavität zu einem Ballon (4), anschließende Temperierung auf einem Ausformungsniveau, sowie schließlich Kühlung und Fixierung des geformten Ballons in seiner ausgeformten Gestalt, **gekennzeichnet durch** folgende Schritte:

a) nach einem ersten Temperierungs- und/oder Formungsschritt des Schlauchrohlings (6) wird das Formwerkzeug (1) vorübergehend geöffnet;

b) die Relativposition zwischen der Einrichtung zum Fixieren eines Schlauchrohlings (6) und dem Formwerkzeug (1) wird in einer Verstellrichtung (B) etwa innerhalb der Trennungsfläche oder -ebene (5) zwischen den beiden Formhälften (1a,1b) verstellt;

c) nach einem Verstellweg, welcher einem endlichen Versatz zwischen mehreren Temperierungs- und/oder Formungskavitäten (2,3,4) in dem Formwerkzeug (1) entspricht, insbesondere einem endlichen Versatz zwischen mehreren Paaren von in beiden Formhälften (1a,1b) eingeformten Formungskavitäten (2,3,4), wird das Formwerkzeug (1) wieder geschlossen und ein folgender Temperierungs- und/oder Formungsschritt durchgeführt.

8. Verfahren nach Anspruch 7, **dadurch gekennzeichnet, dass** die Enden (8) eines Schlauchrohlings (6) in einem frühen Verfahrensschritt durch Streckung in Längsrichtung auf einen dünneren Durchmesser verformt werden.

9. Verfahren nach Anspruch 7 oder 8, **dadurch gekennzeichnet, dass** wenigstens ein Mittelbereich (7) eines Schlauchrohlings (6) in einem späten Verfahrensschritt durch radiales Aufblasen auf einen dickeren Durchmesser verformt wird.

10. Verfahren nach einem der Ansprüche 7 bis 9, **dadurch gekennzeichnet, dass** sich die Forminnentemperatur $T_{Form}$ des Formwerkzeugs (1) im Anschluss an einen Temperatursprung der Vorlauftemperatur $T_{Vorlauf}$ des Temperierungsmediums bereits nach einem kurzen Zeitraum von $t_1$ = 30 sec. innerhalb eines sehr engen Toleranzbandes $T_B = [-T_{UG}; T_{OG}]$ um die Vorlauftemperatur $T_{vorlauf}$ befindet, wobei $2\,°C \leq T_{UG} \leq 12\,°C$, vorzugsweise $4\,°C \leq T_{UG} \leq 8\,°C$, insbesondere $6\,°C \leq T_{UG} \leq 8\,°C$, und wobei $0\,°C \leq T_{OG} \leq 12\,°C$, vorzugsweise $0\,°C \leq T_{OG} \leq 10\,°C$, insbesondere $0\,°C \leq T_{OG} \leq 8\,°C$; bevorzugt wird dieses Toleranzband $T_B = [-T_{UG}; T_{OG}]$ bereits 20 sec. nach einem Temperatursprung der Vorlauftemperatur $T_{Vorlauf}$ des Temperierungsmediums erreicht.

## Claims

1. Device for the production of a balloon component, preferably of various diameter ranges, made from a hose sleeve type raw piece (6), in particular for process and cycle optimized blow molding of a balloon component for a medical catheter by heating up the raw piece (6) to a temperature level suitable for deformation, subsequent admission of blowing pressure while optionally raw piece (6) is simultaneously stretching, molding of the expanding raw piece (6) inside a mold cavity (4) to a balloon, followed by tempering at molding temperature level as well as finally cooling off and fixation of the shaped balloon in its fully formed shape, including a device for fixing, particularly for clamping of a hose sleeve type raw piece (6), and at least one molding die (1), which is designed split, preferably split in longitudinal direction with at least two mold halves (1a, 1b) movable apart and together for opening and closing of the mold (1) approximately perpendicular to the separating face or plane (5), **characterized by**

a) at least one adjustment unit (10) for adjusting the relative position of the device for fixing a hose sleeve type raw piece (6) and at least one molding die (1) in adjustment direction (B) approximately at the separating face or plane (5) between the two mold halves (1 a, 1 b),

b) several tempering and/or molding cavities (2, 3, 4) in one or more jointly adjustable molding die(s) (1) for the performance of various tempering and/or molding steps, particularly several pairs of tempering and/or molding cavities (2, 3, 4) shaped into both mold halves (1 a, 1 b) that exhibit an offset relative to each other along the adjustment direction (B).

2. Device according to claim 1, **characterized by** the fact that the adjustment unit (10) is either designed as a vertical lifting unit or as a unit for moving in horizontal direction.

3. Device according to claim 1 or 2, **characterized by** the fact that different tempering and/or molding cavities (2, 3, 4) exhibit in each case tempering hollow spaces (16a,16b; 23a, 23b) that are separated from each other and/or inflow and outflow connections (17a,17b, 18a, 18b; 24a, 24b, 25a, 25b) for a tempering medium that are separated from each other.

4. Device according to one of the foregoing claims, **characterized by** the fact that different tempering and/or molding cavities (2, 3, 4, 11, 12, 13) are separated from each other and/or thermally insulated against each other.

5. Device according to one of the foregoing claims, **characterized by** the fact that the mold (1) exhibits at its inner side (5) a wall thickness of 5 mm or less, for example of 4 mm or less, preferably of 3 mm or less, in particular of 2.5 mm or less.

6. Device according to one of the foregoing claims, **characterized by** the fact that the tempering performance of the molding die (1), thus the time response of the mold temperature averaged over the surface of the inner side of the mold $T_{Mold}$ in function of the supply flow temperature $T_{Flow}$ of the flowing tempering medium approximately corresponds to a first-order time delay element ($PT_1$ control element) having a time constant ($\tau$), which is - measured at an ambient temperature of 20 °C and a supply flow pressure of the flowing tempering medium of 3 bar - equal to or less than 20 seconds:

$$\tau \leq 20 \text{ seconds},$$

preferably less than 15 seconds:

$$\tau \leq 15 \text{ seconds},$$

in particular less than 10 seconds:

$$\tau \leq 10 \text{ seconds}.$$

7. Process for the production of a balloon component, preferably of various diameter ranges, made from a hose sleeve type raw piece (6), in particular for process and cycle optimized blow molding of a balloon component for a medical catheter, applying a device for fixing, particularly for clamping of a hose sleeve type raw piece (6), and at least one molding die (1), which is split along a separating face or plane (5) into two mold halves (1a, 1 b), particularly split in longitudinal direction that can be moved apart in a direction approximately perpendicular to the separating face or plane (5) of the molding die (1) while clamping a hose sleeve type raw piece (6) and closing the molding die (1) in order to heat up the clamped sleeve type raw piece (6) to a temperature level suitable for deformation, subsequent admission of blowing pressure while optionally raw piece (6) is simultaneously stretching, molding of the expanding raw piece (6) inside a mold cavity (4) to a balloon, followed by tempering at molding temperature level as well as finally cooling off and fixation of the shaped balloon in its fully formed shape, **characterized by** the following steps:

a) After an initial tempering and/or molding step of the hose sleeve type raw piece (6) the molding die (1) is temporarily opened;
b) The relative position of the device for fixing a hose sleeve type raw piece (6) and the molding die (1) is adjusted in adjustment direction (B) approximately at the separating face or plane (5) between the two mold halves (1a, 1b);
c) After an adjustment stroke corresponding to a final offset between several tempering and/or molding cavities (2, 3, 4) in the molding die (1), particularly corresponding to a final offset between several pairs of molding cavities (2, 3, 4) shaped into both mold halves (1 a, 1 b) the molding die (1) is closed again and a following tempering and/or molding step is executed.

8. Process according to claim 7, **characterized by** the fact that the ends (8) of a hose sleeve type raw piece (6) are deformed in an earlier process step by stretching in longitudinal direction to a smaller diameter.

9. Process according to claim 7 or 8, **characterized by** the fact that at least one central portion (7) of a hose sleeve type raw piece (6) is expanded in radial direction by blowing it up to a greater diameter in a subsequent process step.

10. Process according to one of the claims 7 through 9, **characterized by** the fact that the internal mold temperature $T_{Mold}$ of molding die (1) subsequent to a temperature jump of the inflow temperature $T_{Inflow}$ of the tempering medium is already after a short period of $t_1$ = 30 seconds within a very close tolerance range $T_R$ = [$-T_{LL}$; $T_{UL}$] around the inflow temperature $T_{Inflow}$, whereby 2 °C ≤ $T_{LL}$ ≤ 12 °C, preferably 4 °C ≤ $T_{LL}$ ≤ 8 °C, in particular 6 °C ≤ $T_{LL}$ ≤ 8 °C, and whereby 0 °C ≤ $T_{UL}$ ≤ 12 °C, preferably 0 °C ≤ $T_{UL}$ ≤ 10 °C, in particular 0 °C ≤ $T_{UL}$ ≤ 8 °C; preferably such tolerance range $T_R$ = [$-T_{LL}$; $T_{UL}$] is reached already 20 seconds after a temperature jump of the inflow temperature $T_{Inflow}$ of the tempering medium.

**Revendications**

1. Dispositif pour la production d'un élément de ballonnet, présentant de préférence des plages de diamètre différentes, à partir d'une ébauche tubulaire (6), en particulier pour le moulage par soufflage à optimisation de processus et de cycle d'un élément de ballonnet pour un cathéter médical, sous régulation de température de l'ébauche (6) à un niveau de déformation, puis application d'une pression de soufflage avec étirage simultané optionnel de l'ébauche (6), formage de l'ébauche (6) se dilatant dans une cavité de moule (4) en un ballonnet, puis régulation de température à un niveau de formage, ainsi que finalement refroidissement et fixation du ballonnet formé dans sa forme moulée, comportant un dispositif de fixation, en particulier de serrage, d'une ébauche tubulaire (6), et avec au moins un moule (1) qui est divisé, de préférence présentant une division longitudinale avec au moins deux moitiés de moule (1 a, 1 b) déplaçables de manière écartée et ensemble approximativement perpendiculairement à la surface ou au plan de séparation (5) pour ouvrir et fermer le moule (1), **caractérisé par**

   a) au moins une unité de réglage (10) pour le réglage de la position relative entre le dispositif de fixation d'une ébauche tubulaire (6) et au moins un moule (1) dans un sens de réglage (B) approximativement à l'intérieur de la surface ou du plan de séparation (5) entre les deux moitiés de moule (1 a, 1 b),
   b) plusieurs cavités de régulation de température et/ou de moulage (2, 3, 4) dans un ou plusieurs moule(s) (1) réglable(s) ensemble pour l'exécution de différentes opérations de régulation de température et/ou de moulage, en particulier dans chaque cas plusieurs paires de cavités de régulation de température et/ou de moulage (2, 3, 4) moulées dans les deux moitiés de moule (1a, 1b) qui présentent un décalage mutuel suivant le sens de réglage (B).

2. Dispositif selon la revendication 1, **caractérisé en ce que** l'unité de réglage (10) est réalisée comme unité de course verticale ou comme unité de déplacement horizontale.

3. Dispositif selon la revendication 1 ou 2, **caractérisé en ce que** différentes cavités de régulation de température et/ou de moulage (2, 3, 4) présentent chacune des cavités de régulation de température (16a, 16b ; 23a, 23b) séparées les unes des autres et/ou des entrées et sorties (17a, 17b, 18a, 18b ; 24a, 24b, 25a, 25b) séparées les unes des autres pour un agent de régulation de température.

4. Dispositif selon l'une des revendications précédentes, **caractérisé en ce que** différentes cavités de régulation de température et/ou de moulage (2, 3, 4, 11, 12, 13) sont séparées les unes des autres et/ou isolées thermiquement les unes des autres.

5. Dispositif selon l'une des revendications précédentes, **caractérisé en ce que** le moule (1) présente sur sa face intérieure (5) une épaisseur de paroi de 5 mm ou moins, par exemple de 4 mm ou moins, de préférence de 3 mm ou moins, en particulier de 2,5 mm ou moins.

6. Dispositif selon l'une des revendications précédentes, **caractérisé en ce que** le comportement de régulation de température du moule (1), en conséquence le comportement dans le temps de la température intérieure moyenne du moule $T_{Form}$ sur la surface de la face intérieure du moule en fonction de la température aller $T_{Vorlauf}$ de l'agent de régulation de température s'écoulant, correspond approximativement à un élément de retard du premier ordre (élément $PT_1$) avec une constante de temps (T) qui, mesurée à une température ambiante de 20 °C et une pression aller de l'agent de régulation de température s'écoulant de 3 bars, est égale ou inférieure à 20 secondes :

$$T \leq 20 \text{ s},$$

de préférence inférieure à 15 secondes :

$$T \leq 15 \text{ s},$$

en particulier inférieure à 10 secondes :

$$T \leq 10 \text{ s}.$$

**7.** Procédé pour la production d'un élément de ballonnet, présentant de préférence des plages de diamètre différentes, à partir d'une ébauche tubulaire (6), en particulier pour le moulage par soufflage à optimisation de processus et de cycle d'un élément de ballonnet pour un cathéter médical, en utilisant un dispositif de fixation, en particulier de serrage, d'une ébauche tubulaire (6), et au moins un moule (1) qui est divisé, en particulier divisé longitudinalement, le long d'une surface ou d'un plan de séparation (5) en deux moitiés de moule (1a, 1b) qui peuvent être écartées dans un sens approximativement perpendiculaire à la surface ou au plan de séparation (5) du moule (1), par serrage d'une ébauche tubulaire (6), fermeture du moule (1) autour de l'ébauche tubulaire (6) serrée, régulation de température de l'ébauche (6) à un niveau de déformation, puis application d'une pression de soufflage avec étirage simultané optionnel de l'ébauche (6), formage de l'ébauche (6) se dilatant dans une cavité de moule en un ballonnet (4), puis régulation de température à un niveau de formage, ainsi que finalement refroidissement et fixation du ballonnet formé dans sa forme moulée, **caractérisé par** les opérations suivantes :

a) ouverture temporaire du moule (1) après une première opération de régulation de température et/ou de moulage de l'ébauche tubulaire (6) ;
b) réglage de la position relative entre le dispositif de fixation d'une ébauche tubulaire (6) et du moule (1) dans un dispositif de réglage (B) approximativement à l'intérieur de la surface ou du plan de séparation (5) entre les deux moitiés de moule (1a, 1b) ;
c) refermeture du moule (1) après une course de réglage qui correspond à un décalage fini entre plusieurs cavités de régulation de température et/ou de moulage (2, 3, 4) dans le moule (1), en particulier un décalage fini entre plusieurs paires de cavités de moulage (2, 3, 4) moulées dans les deux moitiés de moule (1a, 1 b), puis exécution d'une opération de régulation de température et/ou de moulage.

**8.** Procédé selon la revendication 7, **caractérisé en ce que** les extrémités (8) d'une ébauche tubulaire (6) sont déformées à un diamètre plus mince par étirage en sens longitudinal lors d'une étape de procédé antérieure.

**9.** Procédé selon la revendication 7 ou 8, **caractérisé en ce qu'**au moins une zone centrale (7) d'une ébauche tubulaire (6) est déformée à un diamètre plus épais par soufflage radial lors d'une étape de procédé ultérieure.

**10.** Procédé selon l'une des revendications 7 à 9 , **caractérisé en ce que** la température intérieure du moule $T_{Form}$ du moule (1) à la suite d'un saut de température de la température aller $T_{Vorlauf}$ de l'agent de régulation de température se situe, seulement après une courte période de $t_1 = 30$ secondes, dans une bande de tolérance très étroite $T_B = [-T_{UG} ; T_{OG}]$ par rapport à la température aller $T_{Vorlauf}$, **en ce que** $2 \text{ °C} \leq T_{UG} \leq 12 \text{ °C}$, de préférence $4 \text{ °C} \leq T_{UG} \leq 8 \text{ °C}$, en particulier $6 \text{ °C} \leq T_{UG} \leq 8 \text{ °C}$, et **en ce que** $0 \text{ °C} \leq T_{OG} \leq 12 \text{ °C}$, de préférence $0 \text{ °C} \leq T_{OG} \leq 10 \text{ °C}$, en particulier $0 \text{ °C} \leq T_{OG} \leq 8 \text{ °C}$ ; de préférence ladite bande de tolérance $T_B [-T_{UG} ; T_{OG}]$ est déjà atteinte 20 secondes après un saut de température de la température aller $T_{Vorlauf}$ de l'agent de régulation de température.

Fig.1

Fig.1A

Fig.2

1'

1a

V

3

4

V

Fig.3

1"

11

2

1a

Fig.4

**Fig.5**

**Fig.6**

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010009901 A2